**Europäisches Patentamt**

**European Patent Office**

**Office européen des brevets**

(11) Veröffentlichungsnummer : **0 417 431 B1**

(12) # EUROPÄISCHE PATENTSCHRIFT

(45) Veröffentlichungstag der Patentschrift :
**16.06.93 Patentblatt 93/24**

(51) Int. Cl.$^5$ : **B60T 17/22, F16D 66/00**

(21) Anmeldenummer : **90113905.5**

(22) Anmeldetag : **20.07.90**

(54) **Verfahren zur Überwachung einer Bremseinrichtung auf Überlast.**

(30) Priorität : **13.09.89 DE 3930571**

(43) Veröffentlichungstag der Anmeldung :
**20.03.91 Patentblatt 91/12**

(45) Bekanntmachung des Hinweises auf die
Patenterteilung :
**16.06.93 Patentblatt 93/24**

(84) Benannte Vertragsstaaten :
**DE FR GB IT NL SE**

(56) Entgegenhaltungen :
**EP-A- 0 189 083**
**EP-A- 0 320 602**
**WO-A-84/00406**

(73) Patentinhaber : **WABCO**
**Vermögensverwaltungs-GmbH**
**Am Lindener Hafen 21 Postfach 91 12 80**
**W-3000 Hannover 91 (DE)**

(72) Erfinder : **Feldmann, Joachim**
**Auf dem Papenberg 8**
**W-3057 Neustadt 2 (DE)**
Erfinder : **Schult, Manfred, Dr.**
**Carl-Zuckmayer-Strasse 4**
**W-3008 Garbsen 8 (DE)**
Erfinder : **Petersen, Erwin, Dr.**
**Fliederweg 22**
**W-3050 Wunstorf 1 (DE)**

(74) Vertreter : **Schrödter, Manfred (DE)**
**WABCO Vermögensverwaltungs-GmbH Am**
**Lindener Hafen 21**
**W-3000 Hannover 91 (DE)**

EP 0 417 431 B1

## Beschreibung

Die Erfindung betrifft ein Verfahren zur Überwachung einer eine Verschleiß-Nachstelleinrichtung aufweisenden, durch Druck betätigbaren und bei einer Bremsbetätigung nach Erwärmung eines ausgewählten Bauteils auf eine zulässige Temperatur ihre Belastungsgrenze erreichenden Bremseinrichtung auf Überlast gemäß dem Oberbegriff des Patentanspruchs 1 und eine Anordnung zur Durchführung des Verfahrens.

Ein derartiges Verfahren ist aus der Internationalen Patentanmeldung WO 84/00406 bekannt. Dieses Verfahren sieht die Überwachung einer Bremseinrichtung der vorliegend gattungsbildenden Art auf Überlast durch Messung der Temperatur des ausgewählten Bauteils und Abgabe eines Warnsignals vor, wenn diese den zulässigen Wert erreicht. Zur Messung der Temperatur setzt dieses Verfahren Temperatursensoren an dem oder in der Nachbarschaft des ausgewählten Bauteils ein, als welches eine Bremstrommel oder eine Bremsscheibe erwähnt sind.

Nachteilig ist bei diesem Verfahren die Trägheit der Temperaturüberwachung. Das ausgewählte Bauteil kann die zulässige Temperatur schon überschritten haben, die Bremseinrichtung kann also schon überlastet sein, bevor infolge der erwähnten Trägheit das Warnsignal abgegeben wird.

Der vorliegenden Erfindung liegt deshalb die Aufgabe zugrunde, ein Verfahren der eingangs genannten Art mit einfachen Mitteln derart zu verbessern, daß die Überwachung der Bremseinrichtung auf Überlast weitgehend verzögerungsfrei erfolgt.

Diese Aufgabe wird durch die im Patentanspruch 1 angegebene Erfindung gelöst. Vorteilhafte Weiterbildungen sowie Anordnungen zur Durchführung der Erfindung sind in den Unteransprüchen angegeben.

Die Erfindung setzt unter anderem die Erkenntnis ein, daß zwischen dem der Bremseinrichtung zugeführten Druck, der sich dadurch einstellenden Verformung eines ausgewählten Bauteils und dessen Temperatur ein Zusammenhang besteht.

Die Erfindung läßt sich mit Bauelementen durchführen, die den in der Bremseinrichtung auftretenden Temperaturen nicht ausgesetzt sein müssen. Die Erfindung läßt sich daher mit besonders geringer Störanfälligkeit ausführen.

Die Erfindung bedarf besonders geringen speziellen Aufwands, wenn eines oder mehrere der zu ihrer Durchführung erforderlichen Bauelemente schon aus anderen Gründen vorhanden sind, wie z.B. ein Drucksensor bei einer bestimmten Art elektrischer Bremsdrucksteuerung und/oder ein als Verformungssensor einsetzbarer Drehwinkel- (Hub-)sensor zur Überwachung der Verschleiß-Nachstelleinrichtung.

Enthält die Bremseinrichtung eine Trommelbremse, so kommt als ausgewähltes Bauteil bevorzugt die Bremstrommel in Betracht. Enthält die Bremseinrichtung eine Scheibenbremse, so kommen als ausgewählte Bauteile bevorzugt im Falle einer Teilscheibenbremse der Bremssattel und im Falle einer Vollscheibenbremse das die Funktion der Bremsscheibe übernehmende Bremsgehäuse in Betracht.

Weitere Vorteile der Erfindung werden in deren nunmehr folgenden Erläuterung anhand eines Ausführungsbeispiels angegeben.

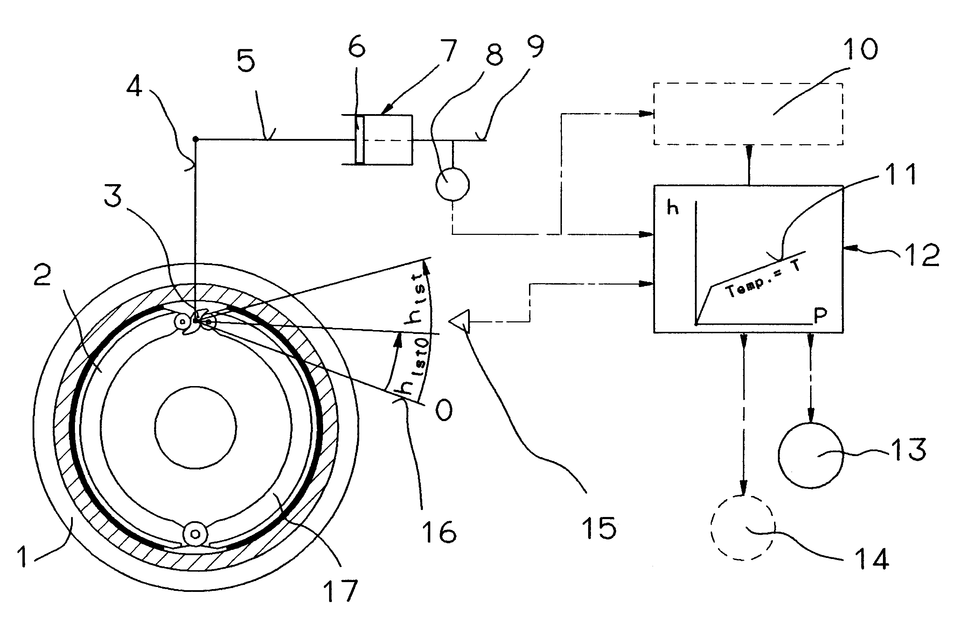

Mit strichpunktierten Linien als elektrischen Verbindungen zeigt die Figur schematisch eine Bremseinrichtung mit Anordnung zur Durchführung der Erfindung.

Die Bremseinrichtung besteht aus einer Trommelbremse mit einer Bremstrommel (1) und Bremsbacken (2, 17) sowie einer Betätigungseinrichtung (3, 4, 5, 7). Die Betätigungseinrichtung besteht aus einem Bremszylinder (7) mit einem Kolbenglied (6), welches als Kolben mit Ringdichtung(en) oder als Membrankolben ausgebildet sein kann, einem Bremsnocken (3) und einer das Kolbenglied (6) mit dem Bremsnocken (3) verbindenden Übertragungseinrichtung (4, 5), die eine in bekannter Weise aufgebaute und deshalb nicht näher dargestellte Verschleiß-Nachstelleinrichtung enthält.

Eine solche Bremseinrichtung ist bekannt. Es erscheint zweckmäßig, die im Rahmen der vorliegenden Erfindung neue aufgezeigten Aspekte ihres Betriebsverhaltens in eine Rekapitulation bekannter Aspekte einzubetten.

Bei unbetätigter Bremseinrichtung, d.h. im druckfreien Zustand derselben, hängt der Bremstrommeldurchmesser von der Temperatur der Bremstrommel (1) und einer etwaigen von der Montage herrührenden mechanischen Grundbelastung ab. Die Temperatur der Bremstrommel (1) hängt außer von der Umgebungstemperatur von der Erwärmung bei der oder den vorausgegangenen Bremsbetätigung(en) ab.

Wird die Bremseinrichtung durch Zufuhr eines Drucks zum Bremszylinder (7) über eine Druckleitung (9) betätigt, so wird die Bremstrommel (1) nach Überwindung eines Ansprechwiderstands durch die Anpreßkraft der Bremsbacken (2, 17) mechanisch belastet und entsprechend elastisch verformt. Gleichzeitig wird die Bremstrommel (1) durch die erbrachte Bremsarbeit erwärmt und dadurch zusätzlich thermisch verformt. Der Bremstrommeldurchmesser ändert (vergrößert) sich entsprechend.

Bei gegebenem Druck können also je nach ihrer Temperatur die Bremstrommel unterschiedlich verformt sein und folglich der Bremstrommeldurchmesser unterschiedlich groß sein. Bei gegebenen Druck besteht demzufolge ein Zusammenhang zwischen dem Bremstrommeldurchmesser und der Temperatur der Bremstrommel (1). Andererseits kennzeichnet die Temperatur der Bremstrommel (1) den Belastungszustand der Bremseinrichtung. Erreicht die Temperatur der Bremstrommel einen zulässigen Wert, nachstehend zulässige Temperatur (T), so ist infolge "Fadings" die Funktionsfähigkeit der Bremseinrichtung gefährdet und ihre Belastungsgrenze erreicht. Aus diesen Gründen und wegen der weiter unten näher beschriebenen relativ einfachen Erfaßbarkeit ihrer Verformung ist die Bremstrommel (1) als für die Überwachung der Bremseinrichtung auf Überlast maßgebliches Bauteil ausgewählt.

Die Verformung der Bremstrommel (1) in Gestalt der Veränderung ihres Durchmessers hat eine Veränderung der Stellwege von Bauteilen der Betätigungseinrichtung, die an der Bremsbetätigung beteiligt sind, zur Folge.

Diese Stellwege können deshalb bei wirksamer Verschleiß-Nachstelleinrichtung als die Verformung des Bauteils Bremstrommel (1) abbildende Größen ausgewertet werden. Im folgenden wird als solche Größe der Drehwinkel des Bremsnockens (3) herangezogen.

Im unbetätigten Zustand der Bremseinrichtung befinden sich das Kolbenglied (6) und mit ihm die Übertragungseinrichtung (4, 5) sowie der Bremsnocken (3) und die Bremsbacken (2, 17) unter der Einwirkung von nicht dargestellten Rückstellmitteln in einer Rückzugstellung. Ein beliebiger Strahl (16) durch die Drehachse des Bremsnockens (3) lege den zugeordneten Drehwinkel Null (0) des Bremsnockens (3) fest. In diesem Zustand weisen die Bremsbacken (2, 17) gegenüber der Bremstrommel (1) ein Lüftspiel auf.

Da vorliegend die Verschleiß-Nachstelleinrichtung eine Vergrößerung des Lüftspiels infolge Bremsbelagverschleißes ausgleicht, hängt dieses außer von der Grundeinstellung nur von der temperaturabhängigen Verformung der Bremstrommel (1) ab.

Bei Betätigung der Bremseinrichtung werden zunächst gegen den Ansprechwiderstand - dazu gehört u.a. die Kraft der Rückstellmittel - durch Drehung des Bremsnockens (3) um einen Anfangs-Drehwinkel ($h_{isto}$) das Lüftspiel überwunden und dadurch die Bremsbacken (2, 17) gerade an die Bremstrommel (1) angelegt. Der Anfangs-Drehwinkel ($h_{isto}$) bildet also das vorhandene Lüftspiel ab. Der dem Anfangs-Drehwinkel ($h_{isto}$) zugeordnete Druck ist der Ansprechdruck ($P_{isto}$).

Bei dem anschließenden Anstieg des Drucks im Bremszylinder (7) auf den vom Fahrer als Bremsdruck gewollten Druck ($P_{ist}$) erfährt die Bremstrommel (1) die bereits erwähnte gleichzeitige elastische und zusätzliche thermische Verformung mit entsprechender Veränderung ihres Durchmessers. Diese Verformung hat eine Vergrößerung des Drehwinkels des Bremsnockens (3) auf einen Wert ($h_{ist}$) zur Folge. Der Drehwinkel ($h_{ist}$) bleibt im Verlauf einer Bremsbetätigung nur gleich, wenn die Bremstrommel (1) eine Beharrungstemperatur erreicht hat. Ansonsten verändert sich der Drehwinkel ($h_{ist}$) im Verlauf der Bremsbetätigung wegen der mit steigender Temperatur zunehmenden Vergrößerung des Bremstrommeldurchmessers.

Die außerdem in der Figur schematisch dargestellte Anordnung zur Durchführung eines Verfahrens zur Überwachung der Bremseinrichtung auf Überlast ist in der Grundausführung mit (8, 12, 15) zu bezeichnen und besteht in dieser Grundausführung aus einem Verformungssensor (15), einem Drucksensor (8) und einer Auswerteelekronik (12).

Der Verformungssensor (15) erfaßt den Drehwinkel ($h_{ist}$) des Bremsnockens (3) und setzt diesen in ein elektrisches Verformungssignal um. Der Drucksensor (8) erfaßt den Druck ($P_{ist}$) im Bremszylinder (7) und setzt diesen in ein elektrisches Drucksignal um.

In der Auswerteelektronik (12) ist, in elektrische Werte umgesetzt, die druckabhängige Kennlinie des Drehwinkels (h) der auf die zulässige Temperatur (T) erwärmten Bremstrommel (1), nachstehend Verformungskennlinie (11) $h = f_{(p,T)}$, gespeichert. Die Verformungskennlinie (11) definiert in dem h/p-Koordinatenfeld zwei Bereiche. In dem in der Figur unterhalb der Verformungskennlinie (11) befindlichen Bereich liegt die Temperatur der Bremstrommel (1) unterhalb der zulässigen Temperatur (T), in dem oberhalb der Verformungskennlinie (11) befindlichen Bereich liegt die Temperatur der Bremstrommel (1) über der zulässigen Temperatur (T). Auf der Verformungskennlinie (11) weist die Bremstrommel (1) gerade die zulässige Temperatur (T) auf.

In der Regel erfolgen die Ermittlung der Verformungskennlinie (11) und die dazu erforderliche Erwärmung der Bremstrommel (1) unter einsatzgemäßen Einbau- und Betriebsbedingungen der Bremseinrichtung. Es ist aber auch möglich, diese Schritte im Prüffeld durchzuführen.

Die Auswertelektronik (12) ist eingangsseitig mit den Ausgängen des Verformungssensors (15) und des Drucksensors (8) verbunden.

Die Auswertelektronik (12) ist so ausgebildet, daß sie den jeweils erfaßten Drehwinkel ($h_{ist}$) mit dem dem vorhandenen Druck ($P_{ist}$) zugeordneten Wert $h_{(P_{ist},T)}$ der Verformungskennlinie (11) vergleicht und ein Warnsignal abgibt, wenn der Wert ($h_{ist}$) gleich groß wie der Wert der Verformungskennlinie (11) oder größer als dieser ist. Mit anderen Worten läßt sich diese Ausbildung der Auswertelektronik (12) dahingehend beschreiben, daß sie ein Warnsignal abgibt, wenn der durch den Drehwinkel ($h_{ist}$) und den Druck ($p_{ist}$) bestimmte Punkt des h/p-Koordinatenfeldes die Verformungskennlinie (11) erreicht oder in Richtung höherer Werte des Drehwinkels (h) überschreitet. Da die Verformungskennlinie (11) der zulässigen Temperatur (T) der Bremstrommel (1) entspricht und diese bei höheren Werten von ($h_{ist}$) überschritten ist, kennzeichnet das Warnsignal also das Erreichen oder auch Überschreiten der zulässigen Temperatur (T) der Bremstrommel (1).

Mit (14) ist eine Einrichtung angedeutet, die das Warnsignal in eine von dem Fahrer erfaßbare Form umsetzt.

In der bisher beschriebenen Grundausführung arbeitet die Anordnung (8, 12, 15) dauernd, nimmt die Auswerteelektronik (12) also dauernd den soeben erwähnten Vergleich vor.

Die Grundausführung kann durch ein gestrichelt angedeutetes Zeitglied (10) derart fortgebildet werden, daß sie nur während einer Bremsbetätigung wirkt.

Das Zeitglied (10) ist so ausgebildet, daß es während einer Bremsbetätigung zu einem oder mehreren vorbestimmten Zeitpunkt nach Beginn der Bremsbetätigung ein Meßsignal abgibt. Die Auswerteelektronik (12) ist in dieser Fortbildung so ausgebildet, daß sie das Meßsignal empfängt und von diesem aktiviert wird, also ihre oben beschriebene Funktion nur nach Erhalt eines Meßsignals ausübt. Sie kann darüber hinaus mit einer Haltefunktion versehen sein, die die Aufrechterhaltung des Warnsignals auch nach Abfall des Meßsignals gewährleistet.

Beginn und Ende der Bremsbetätigung können dem Zeitglied (10) auf jede geeignete Art signalisiert werden, etwa durch einen Signalgeber an einem vom Fahrer bedienten Bremswertgeber. Vorliegend wertet das Zeitglied (10) als Beginn und Ende der Bremsbetätigung den Durchgang des Drucks im Bremszylinder (7) durch den Wert des Ansprechdrucks ($p_{isto}$). Zu diesem Zweck ist das Zeitglied (10) mit dem Ausgang des Drucksensors (8) verbunden.

Die Anordnung (8, 12, 15) bzw. (8, 10, 12, 15) ermöglicht auch eine Kontrolle der Verschleiß-Nachstelleinrichtung. Stellt diese nicht nach, so erfaßt der Verformungssensor (15) bei einer Bremsbetätigung einen ungewöhnlich großen Anfangs-Drehwinkel ($h_{isto}$), der mittels einer geeigneten Einrichtung oder einer entsprechenden Ausbildung der Auswerteelektronik (12) in einen Hinweis für den Fahrer auf eine Funktionsstörung der Verschleiß-Nachstelleinrichtung umgesetzt werden kann. Die Auswerteelektronik (12) könnte in diesem Zusammenhang beispielsweise so ausgebildet werden, daß sie bei Erhalt eines dem Ansprechdruck ($p_{isto}$) entsprechenden Drucksignals eine Plausibilitätsprüfung des Verformungssignals, z.B. einen Vergleich mit einem eingespeicherten Grenzwert, vornimmt und bei Feststellung einer Nichtplausibilität ein Warnsignal abgibt. In der Fortbildung mit Zeitglied (10) kann sie von diesem zu dieser Plausibilitätsprüfung gesteuert werden. Durch eine gestrichelt dargestellte Einrichtung (14), die dieses Warnsignal in eine für den Fahrer erfaßbare Form umsetzt, ist diese Fortbildungsmöglichkeit angedeutet.

Als die Verformung der Bremstrommel (1) bildender Stellweg könnte beispielsweise auch der Hub des Kolbenglieds (6) dienen. In diesem Hub würde sich aber auch die - in erster Linie elastische - Verformung der Übertragungseinrichtung (4, 5) abbilden. Es liegt auf der Hand, daß die im Ausführungsbeispiel angewandte Erfassung der Verformung mittels des Drehwinkels (h) des Bremsnockens (3) demgegenüber einfacher ist.

Im Ausführungsbeispiel wurde aus den weiter obengenannten Gründen die Bremstrommel (1) als für den Belastungszustand der Bremseinrichtung maßgebliches Bauteil ausgewählt. Die im Ausführungsbeispiel realisierte technische Lehre läßt sich aber in entsprechender Anwendung auf andere Bauteile einer Bremseinrichtung mit Bremstrommel und auf ganz andere Bauarten der Bremseinrichtung übertragen. Insbesondere ist in diesem Zusammenhang an eine Bremseinrichtung mit Scheibenbremse zu denken. In Verbindung mit einer solchen könnte der Hub eines Kolbenglieds die zu bevorzugende, die Verformung des ausgewählten Bauteils abbildende, Größe sein.

## Patentansprüche

1. Verfahren zur Überwachung einer eine Verschleiß-Nachstelleinrichtung aufweisenden, durch Druck p betätigbaren und bei einer Bremsbetätigung nach Erwärmung eines ausgewählten Bauteils (Bremstrommel 1) auf eine zulässige Temperatur T ihre Belastungsgrenze erreichenden Bremseinrichtung auf Überlast, dadurch gekennzeichnet, daß

   a) in einer Voruntersuchung

   aa) das sich bei einer Bremsbetätigung auch verformende ausgewählte Bauteil (Bremstrommel 1) auf die zulässige Temperatur T erwärmt wird,

   ab) bei so erwärmtem ausgewähltem Bauteil (Bremstrommel 1) die druckabhängige Kennlinie einer dessen Verformung abbildenden Größe h, nachstehend Verformungskennlinie (11) $h = f_{(p,T)}$, ermittelt wird,

   b) bei einer Bremsbetätigung

   ba) der die sich einstellende Verformung des ausgewählten Bauteils (Bremstrommel 1) abbildende Wert $h_{ist}$ der Größe h und der vorhandene Druck $p_{ist}$ gemessen werden,

   bb) ein Warnsignal abgegeben wird, wenn der durch den Wert $h_{ist}$ und den Druck $p_{ist}$ bestimmte Punkt die Verformungskennlinie (11) $h = f_{(p,T)}$ erreicht oder in Richtung höherer Werte der Größe h überschreitet.

2. Verfahren nach Anspruch 1, wobei die Bremseinrichtung eine Trommelbremse enthält, dadurch gekennzeichnet, daß das ausgewählte Bauteil die Bremstrommel (1) ist.

3. Anordnung zur Durchführung des Verfahrens nach einem der Ansprüche 1 oder 2, <u>gekennzeichnet durch die Merkmale:</u>

    a) es ist ein den Wert $h_{ist}$ erfassender und in ein elektrisches Verformungssignal umsetzender Verformungssensor (15) vorgesehen;

    b) es ist ein den vorhandenen Druck $p_{ist}$ erfassender und in ein elektrisches Drucksignal umsetzender Drucksensor (8) vorgesehen;

    c) es ist eine das Verformungssignal und das Drucksignal empfangende Auswerteelektronik (12) vorgesehen;

    d) in der Auswerteelektronik (12) ist die druckabhängige Verformungskennlinie (11) $h = f_{(p,T)}$ gespeichert;

    e) die Auswertelektronik (12) ist so ausgebildet, daß sie den Wert $h_{ist}$ mit dem dem vorhandenen Druck $P_{ist}$ zugeordneten Wert $h_{(pist,T)}$ der Verformungskennlinie $h = f_{(p,T)}$ vergleicht und ein Warnsignal abgibt, wenn der Wert $h_{ist}$ gleich groß wie der Wert $h_{(P_{ist},T)}$ oder größer als dieser ist.

4. Anordnung nach Anspruch 3, <u>gekennzeichnet durch die Merkmale:</u>

    a) es ist ein Zeitglied (10) vorgesehen, welches so ausgebildet ist, daß es während einer Bremsbetätigung zu einem oder mehreren vorbestimmten Zeitpunkten nach deren Beginn ein Maßsignal abgibt;

    b) die Auswerteelektronik (12) ist derart ausgebildet, daß sie das Meßsignal empfängt und von diesem aktiviert wird.

## Revendications

1. Procédé de surveillance contre la surcharge d'un système de freinage comportant un dispositif de rattrapage d'usure, système qui est commandé par pression p et atteint sa limite de charge, lors d'un serrage du frein, après l'échauffement d'un composant choisi (tambour de frein 1) à une température T admissible, <u>caractérisé en ce que</u>

    a) dans un examen préalable

      aa) on échauffe le composant choisi (tambour de frein 1), lequel se déforme également lors d'un serrage du frein, jusqu'à la température admissible T,

      ab) après avoir échauffé ainsi le composant choisi (tambour de frein 1), on relève la courbe caractéristique en fonction de la pression d'une grandeur h représentant la déformation de ce composant, désignée ci-après par courbe caractéristique de déformation (11) $h = f_{(p,T)}$, et

    b) lors d'un serrage du frein

      ba) on mesure la valeur réelle $h_r$ représentant la déformation qui s'établit du composant choisi (tambour de frein 1) de la grandeur h et la pression $p_r$ régnante et

      bb) on délivre un signal d'avertissement lorsque le point déterminé par la valeur $h_r$ et la pression $p_r$ atteint la courbe caractéristique de déformation (11) $h = f_{(p,T)}$ ou dépasse cette courbe dans le sens de valeurs plus élevées de la grandeur h.

2. Procédé selon la revendication 1, dans lequel le système de freinage contient un frein à tambour, <u>caractérisé en ce</u> que le composant choisi est le tambour de frein (1).

3. Dispositif pour la mise en oeuvre du procédé selon la revendication 1 ou 2, <u>caractérisé en ce que:</u>

    a) il contient un capteur de déformation (15) détectant la valeur $h_r$ et la convertissant en un signal électrique de déformation;

    b) il contient un capteur de pression (8) détectant la pression régnante $p_r$ et la convertissant en un signal électrique de pression;

    c) il contient une électronique d'exploitation (12) recevant le signal de déformation et le signal de pression;

    d) la courbe caractéristique de déformation en fonction de la pression (11) $h = f_{(p,T)}$ est mémorisée dans l'électronique d'exploitation (12); et

    e) l'électronique d'exploitation (12) est conçue de manière qu'elle compare la valeur $h_r$ avec la valeur $h_{(p_r,T)}$ coordonnée à la pression $p_r$ régnante de la courbe caractéristique de déformation $h = f_{(p,T)}$ et délivre un signal d'avertissement lorsque la valeur $h_r$ est égale ou supérieure à la valeur $h_{(p_r,T)}$.

4. Dispositif selon la revendication 3, <u>caractérisé en ce que:</u>

    a) il contient un élément à fonction temporelle (10) conçu pour, pendant un serrage du frein, délivrer un signal de mesure à un ou plusieurs instants prédéterminés après le début de ce serrage du frein; et

    b) l'électronique d'exploitation (11) est conçue pour recevoir ce signal de mesure et être activée par lui.

## Claims

1. A method of monitoring a braking arrangement for overload, the arrangement having a wear-compensation device, being pressure-operable and reaching its load limit after heating of a selected component (brake, drum 1) to an admissible temperature T during a braking operation, characterized in that

a) in a preliminary examination

aa) the selected component (brake drum 1), which is also deformable during a braking operation, is heated to the admissible temperature T,

(ab) with the selected component (brake drum 1) thus heated the pressure-dependent characteristic of a variable h representing this deformation, hereinafter referred to as the deformation characteristic (11) h= $f_{(p,T)}$ is ascertained,

b) during a braking operation

(ba) the value $h_{ist}$ representing the existing deformation of the selected component (brake drum 1), the variable h and the existing pressure $p_{ist}$ are measured,

(bb) a warning signal is issued when the point determined by the value $h_{ist}$ and the pressure $p_{ist}$ reaches the deformation characteristic (11), h = $f_{(p,T)}$ or exceeds it in the direction of higher values of the variable h.

2. A method according to claim 1, in which the braking arrangement contains a drum brake, characterized in that the selected component is the brake drum (1).

3. An arrangement for implementing the method according to one of claims 1 and 2, characterized by the following features:

a) a deformation sensor (15) detecting the value $h_{ist}$ and converting it into an electrical deformation signal is provided;

b) a pressure sensor (8) detecting the existing pressure $p_{ist}$ and converting it into an electrical pressure signal is provided;

c) evaluating electronics (12) receiving the deformation signal and the pressure signal are provided;

d) the pressure-dependent deformation characteristic (11) h = $f_{(p,T)}$ is stored in the evaluating electronics (12);

e) the evaluating electronics (12) are constructed so that they compare the value $h_{ist}$ with the value $h_{(pist,T)}$ of the deformation characteristic h = $f_{(p,T)}$ associated with the existing pressure $p_{ist}$ and issue a warning signal when the value $h_{ist}$ is the same as the value $h_{(pist,T)}$ or larger than this.

4. An arrangement according to claim 3, characterized by the following features:

a) a timing element (10) is provided, which is constructed so that during a braking operation it delivers a measuring signal at one or more predetermined moments after the start of the braking operation;

b) the evaluating electronics (12) are constructed so that they receive the measuring signal and are activated by it.